# EUROPEAN PATENT APPLICATION

(11) **EP 3 342 984 A1**
(43) Date of publication of application: **04.07.2018**
(21) Application number: 18150231.1
(22) Date of filing: 03.01.2018
(51) Int. Cl.: F01D 5/22, F01D 11/00

(54) **BLADE, CORRESPONDING GAS TURBINE ENGINE AND METHOD OF DAMPING VIBRATION BETWEEN ADJOINING BLADES**

(30) Priority: 03.01.2017 US 201715397501
(71) Applicant: United Technologies Corporation, Farmington, CT 06032 (US)
(72) Inventor: THISTLE, Charles, Middletown, CT Connecticut 06457 (US); HASSAN, Mohamed, Palm City, FL Florida 34990 (US)
(74) Representative: Dehns

(57) **Abstract**

A blade for a gas turbine engine (20) is provided. The blade having: a root; a platform (78) located between the root and the blade, wherein the platform defines a cavity (76); and a chamfer (84) located on opposing peripheral edges (86, 88) of the platform.

## Description

### BACKGROUND

Exemplary embodiments of the present disclosure are directed to turbine blades and/or compressor blades for a gas turbine engine and methods for restraining a damper of a turbine blade and/or compressor blade.

A gas turbine engine includes a plurality of turbine blades and compressor blades each received in a slot of a disk. The blades are exposed to aerodynamic forces that can result in vibratory stresses. A seal damper or damper can be located under platforms of adjacent blades to reduce the vibratory response and provide frictional damping between the blades. The seal damper slides on an underside of the platforms. The seal damper is made of a material that is dissimilar from the material of the blades. When the vibratory motions of adjacent blades oppose each other (that is, occur out of phase), the seal damper slides to absorb the energy of vibration.

Seal dampers work by conforming to the underside of blade platforms to seal the mate-face gap between blades and provide frictional damping to suppress the vibratory response of the blades to excitations in the engine. These dampers are typically made of sheet metal and have been shown to readily conform to the underside of the platform when subjected to centrifugal loads in a high temperature environment due to their lack of stiffness out-of-plane.

Seal dampers in general are most effective in damping the tangential vibration of the blades, since the plane of contact between the damper and the platform lies mostly on the tangential plane. There exists, however, a significant component of blade vibration in the radial direction (i.e. the platforms move relative to each other in the radial direction).

Accordingly, it is desirable to provide a method and apparatus for restraining movement of a damper with respect to a blade platform.

### BRIEF DESCRIPTION

In one embodiment, a blade for a gas turbine engine is provided. The blade having: a root; a platform located between the root and the blade, wherein the platform defines a cavity; and a chamfer located on opposing peripheral edges of the platform.

In addition to one or more of the features described above, or as an alternative to any of the foregoing embodiments, the chamfer may be cast into the peripheral edges of the platform.

In addition to one or more of the features described above, or as an alternative to any of the foregoing embodiments, the chamfer may be machined into the peripheral edges of the platform.

In addition to one or more of the features described above, or as an alternative to any of the foregoing embodiments, the blade further comprises a damper seal having a top portion received with a recess defined by the chamfer.

In addition to one or more of the features described above, or as an alternative to any of the foregoing embodiments, the damper seal may be formed from stamped sheet metal.

In addition to one or more of the features described above, or as an alternative to any of the foregoing embodiments, the blade may be a turbine blade.

In addition to one or more of the features described above, or as an alternative to any of the foregoing embodiments, the blade may be a compressor blade.

In another embodiment, a gas turbine engine is provided. The gas turbine engine having: a disk; a plurality of blades secured to the disk, each of the blades having a root, and a platform located between the root and the blade, wherein a seam is defined by adjoining platforms of each of the blades when they are secured to the disk, wherein the platform of each of the plurality of blades defines a cavity and has a chamfer located on opposing peripheral edges of the platform, wherein a recess is formed by the chamfer of adjacent blades of the plurality of blades when they are secured to the disk; and a damper seal received in the recess, wherein the damper seal covers the seam.

In addition to one or more of the features described above, or as an alternative to any of the foregoing embodiments, the chamfer may be cast into the peripheral edges of the platform.

In addition to one or more of the features described above, or as an alternative to any of the foregoing embodiments, the chamfer may machined into the peripheral edges of the platform.

In addition to one or more of the features described above, or as an alternative to any of the foregoing embodiments, the damper seal may have a top portion received within the recess.

In addition to one or more of the features described above, or as an alternative to any of the foregoing embodiments, the damper seal may be formed from stamped sheet metal.

In addition to one or more of the features described above, or as an alternative to any of the foregoing embodiments, the blade may be a turbine blade.

In addition to one or more of the features described above, or as an alternative to any of the foregoing embodiments, the blade may be a compressor blade.

In another embodiment, a method of damping vibrations between adjoining blades of a gas turbine engine is provided. The method including the steps of: locating a damper seal adjacent to a seam defined by adjoining platforms of blades of the gas turbine engine; and restraining the movement of the damper seal in a direction away from the seam by retaining the damper seal with a pair of chamfers formed in opposite peripheral edges of the adjoining platforms.

In addition to one or more of the features described above, or as an alternative to any of the foregoing embodiments, the chamfer may be cast into the peripheral edges of the platform.

In addition to one or more of the features described above, or as an alternative to any of the foregoing embodiments, the chamfer may be machined into the peripheral edges of the platform.

In addition to one or more of the features described above, or as an alternative to any of the foregoing embodiments, the damper seal may be formed from stamped sheet metal.

In addition to one or more of the features described above, or as an alternative to any of the foregoing embodiments, the blade may be a compressor blade.

In addition to one or more of the features described above, or as an alternative to any of the foregoing embodiments, the blade may bea turbine blade.

### BRIEF DESCRIPTION OF THE DRAWINGS

The following descriptions are by way of example only, and should not be considered limiting in any way. With reference to the exemplary accompanying drawings, like elements are numbered alike:
FIG. 1 is a partial cross sectional view of a gas turbine engine;
FIG. 2 is a non-limiting perspective view of a damper or damper seal;
FIG. 3 is a side view of the damper seal illustrated in FIG. 2;
FIG. 4 is a perspective view of a damper seal installed between two adjacent turbine blades;
FIG. 5 is a side view of a turbine blade in accordance with an embodiment of the present disclosure;
FIG. 6 is a view along lines 6-6 of FIG. 5; and
FIG. 7 is a cross-sectional side view of two adjacent turbine blades with chamfered edges.

### DETAILED DESCRIPTION

A detailed description of one or more embodiments of the disclosed apparatus and method are presented herein by way of exemplification and not limitation with reference to the Figures.

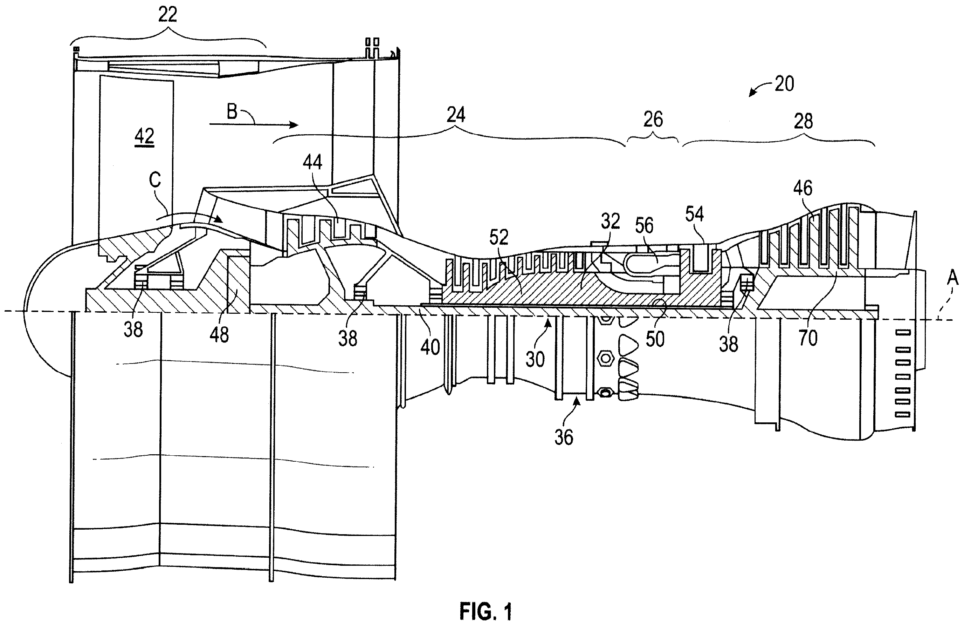

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planeteray gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

The turbine section 28 includes turbine discs 70 that each rotate about the axis A. As is known in the related arts, the turbine section may include a plurality of stages each having a plurality of turbine blades mounted to respective turbine disk of each stage.

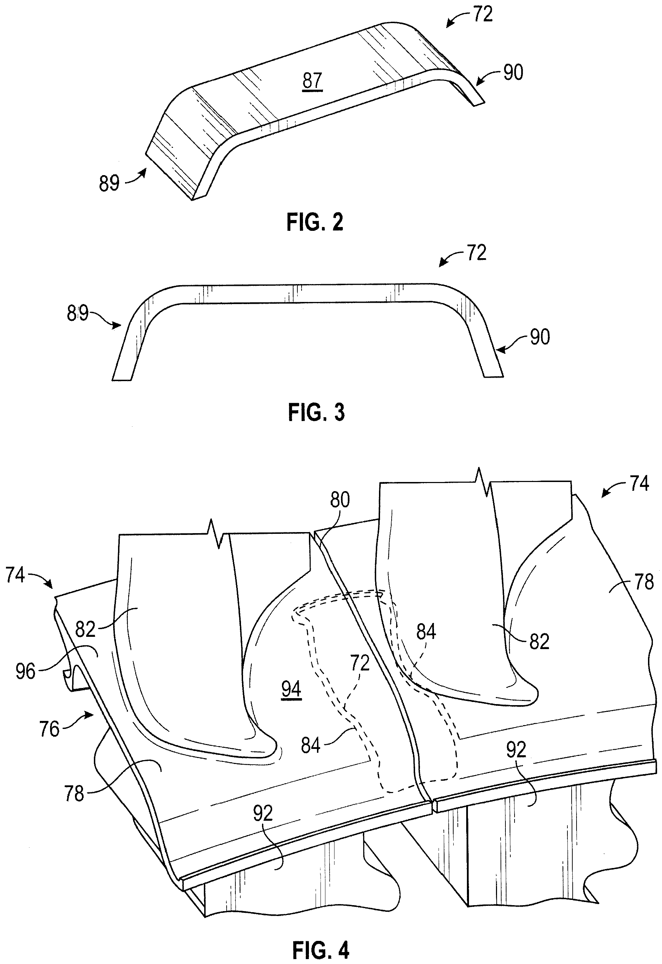

FIG. 2 illustrates a non-limiting perspective view of a damper seal or damper 72 for installation under platforms of adjacent turbine blades to reduce the vibratory response and provide frictional damping between the turbine blades as well as sealing the mate-face gap between blades. These dampers may be made of sheet metal and conform to the underside of the platform when subjected to centrifugal loads in a high temperature environment due to their lack of stiffness out-of-plane. Although the present disclosure is described with reference to turbine blades it is understood that anyone of the various embodiments disclosed herein may be applied to platforms of adjacent compressor blades of a compressor disc or rotor to reduce the vibratory response and provide frictional damping between the compressor blades as well as sealing the mate-face gap between blades. Therefore and when referring to FIGS. 4-7 these may alternatively be referred to as compressor blades. Moreover, various embodiments of the present disclosure may be applied in any other application where there is a desire to reduce the vibratory response and provide frictional damping between two adjoining items that are rotated about an axis as sealing the mate-face gap between the two adjoining items. FIG. 3 is a side view of the damper seal or damper 72 illustrated in FIG. 2.

The damper seal or damper 72 may also be formed by direct metal laser sintering. Other manufacturing methods are possible. The damper seal 72 may be ductile enough to conform to a lower surface of the platform of the turbine blade. In one example, the damper seal 72 is substantially c-shaped.

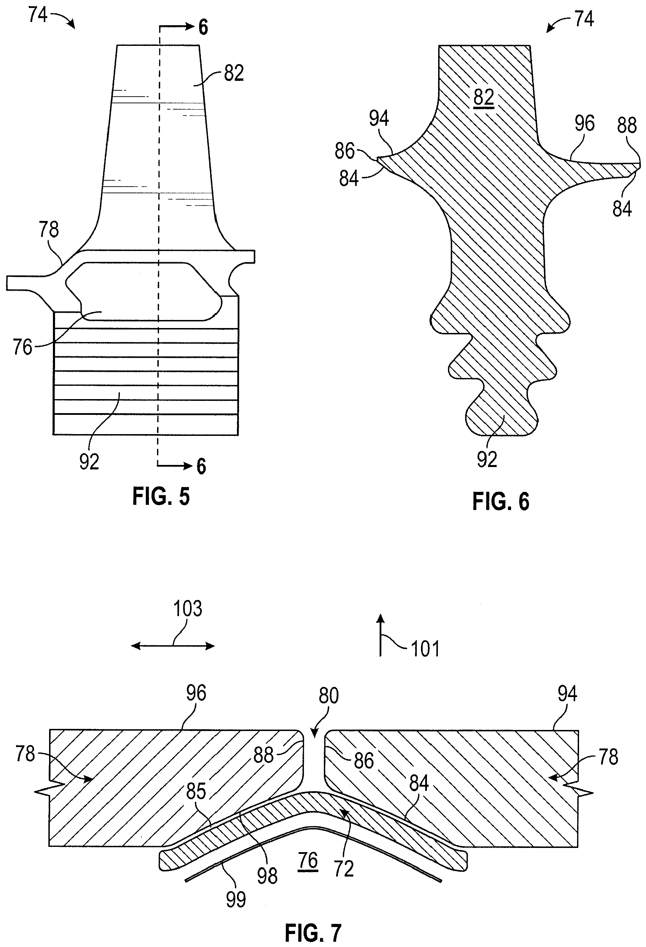

Referring now to FIG. 4, a top perspective view of the damper seal 72 installed in adjacent turbine blades 74 is provided. The damper seal 72 is located in a neck cavity 76 of the turbine blades 74. As illustrated in at least FIGS. 5-7, the neck cavity 76 is defined as being located below the platform 78 of the turbine blade 74 and above the turbine disk the blades 74 are secured to.

As illustrated, the damper seal 72 spans a space 80 between adjacent platforms 78 of adjacent turbine blades 74 to provide both damping and sealing and prevent the leakage of the cooling air from the cavity 76. The damper seal 72 imposes a normal load on the adjacent turbine blades 74 due to centrifugal force. The resulting frictional force created by the normal load produces damping to reduce a vibratory response. The damper seal 72 prevents the cooling air in the neck cavity 76 from leaking into the hot flow gas path between airfoils 82 of the turbine blades 74.

The damper seal 72 is located under the platforms 78 of adjacent turbine blades 74 and spans the space 80 between the platforms 78. In accordance with an embodiment of the present disclosure, a bevel or chamfer 84 is located at lateral edges 86 and 88 of the platform 78. In accordance with various embodiments of the present disclosure the bevel or chamfer 84 may have any configuration (e.g, linear, curved, combinations thereof, etc.). Thus when two platforms 78 of adjacent blades 74 are placed next to each other the bevels or chamfers define a recess or recessed area 85 for receipt of at least a portion of the damper seal 72 therein. When the damper seal 72 is located beneath the bevels or chamfers 84 of adjacent platforms 78, a top portion 87 of the damper seal 72 is received in recess or recessed area 85. The top portion 87 extends between a first end portion 89 and an opposing opposite second end portion 90. As illustrated, the first end portion 89 and the second end portion 90 extend towards a root 92 of the turbine blade 74 when the damper seal 72 is located in the cavity 76.

In one embodiment and as illustrated in FIG. 7, the chamfers or bevels 84 of adjacent platforms 78 are illustrated adjacent to each other, which corresponds to when the platforms 78 of the turbine blades 74 are secured to the disc 70.

As illustrated, the chamfer or bevel 84 of edge 86 runs under a suction side 94 of the platform 78 while the chamfer or bevel 84 of edge 88 runs under a pressure side 96 of the platform 78. As illustrated, the edges 86 and 88 are located on opposite sides of the platform 78 such that adjacent bevels or chamfers 84 define the recess or cavity 85 into which the top portion 87 of the damper seal 72 is received. The damper seal 72 is wedged into the recess or cavity 98 as illustrated in FIG. 7 such that the top portion 87 of the damper seal 72 is curved. By wedging the top portion 87 into the recess or cavity 98, a radial component is added to the contact surface 87 of the damper seal 72. In other words, the curved surface of top portion 87, which is caused by the heat and centripetal forces applied thereto, is adjacent to the surfaces of recess 85 formed by the adjacent chamfers 84. This radial component is illustrated by curved line 99. This radial component improves dampening in the radial direction between the adjacent platforms 78 illustrated by arrow 101.

In addition, the chamfers or bevels also restrain movement of the damper seal 72 in the directions of arrows 103. Accordingly, the platforms 78 with chamfered edges provide damping in a radial direction as well as preventing movement of the damper seal in a tangential direction(s) 103.

In one embodiment, the bevel or chamfer 84 on the platform edge may be formed into existing or new designs. In other words, the bevel or chamfer 84 may be machined into a platform 78 that already has been formed or alternatively the bevel or chamfer 84 may be included into a cast used to form new platforms 78. Moreover and by using a bevel or chamfer 84 at peripheral edges 86, 88 of the platform 78 there is no need for a special damper seal design. In this way, the use of a bevel or chamfer can be particularly useful in the aftermarket as a way of correcting unintended damper operation. For example an existing platform 78 can be machined to have a chamfer or bevel 84 located at a peripheral edge.

In accordance with one non-limiting embodiment, a bevel or chamfer 84 extending over a portion or the extent of both the pressure side and suction side of the platform edges is provided. The beveled edge provides a wedge into which a seal damper or damper seal 72 plastically deforms under centrifugal loading and high temperature. The beveled edge provides a contact surface between the underside of the platforms and the seal damper or damper seal 72 with a radial and tangential component so that the system is effective in suppressing both radial and tangential vibration.

Various embodiments of the present disclosure provide improved damper performance for blades that exhibit radial vibration. In addition, existing designs can be easily modified to incorporate the chamfered edge design. As such, a potential aftermarket fix to correct excessive damper deformation is provided. Still further, the overall weight of the platform 78 is reduced due to the removal of material to create the chamfer or bevel 84.

By locating the chamfer or bevel 84 on an interior surface of the platform 78, a device is created that restrains the damper seal 72 from sliding toward the suction side of the pocket 76 or the pressure side of the pocket 76 when it is subject to tangential dynamic forces or rotational forces (e.g. induced by the orientation of the pocket (or broach angle) relative to the axis of rotation).

This design feature (e.g., chamfer or bevel 84) allows the potential elimination of weight increasing damper restraint devices. It can make new and current damper designs more effective without modifying the damper itself, and with only a minimal change to the blade platform that can be readily cast in. The feature can also be formed through some grinding or machining technique to remove materials from the platform to create the bevel or chamfer or the bevel or chamfer can be can cast in.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure as set out in the claims. In addition, many modifications may be made to adapt a particular situation or material to the teachings of the present disclosure as set out in the claims without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A blade (74) for a gas turbine engine (20), comprising:
a root (92);
a platform (78) located between the root and the blade, wherein the platform defines a cavity (76); and
a chamfer (84) located on opposing peripheral edges (86, 88) of the platform.

2. The blade as claimed in claim 1, wherein the chamfer is cast into the peripheral edges of the platform.

3. The blade as claimed in claim 1, wherein the chamfer machined into the peripheral edges of the platform.

4. The blade as claimed in any of claims 1, 2 or 3, further comprising a damper seal (72) having a top portion received with a recess (85) defined by the chamfer.

5. The blade as in claim 4, wherein the damper seal is formed from stamped sheet metal.

6. The blade as claimed in any preceding claim, wherein the blade is a turbine blade.

7. The blade as claimed in any of claims 1 to 5, wherein the blade is a compressor blade.

8. A gas turbine engine, comprising:
a disk (70);
a plurality of blades as claimed in any of claims 1 to 7 secured to the disk,
wherein a seam (80) is defined by adjoining platforms of each of the blades when they are secured to the disk, wherein a recess (85) is formed by the chamfer of adjacent blades of the plurality of blades when they are secured to the disk; and
a damper seal (72) received in the recess, wherein the damper seal covers the seam.

9. A method of damping vibrations between adjoining blades (74) of a gas turbine engine (20), comprising:
locating a damper seal (72) adjacent to a seam (80) defined by adjoining platforms (78) of blades of the gas turbine engine; and
restraining the movement of the damper seal in a direction away from the seam by retaining the damper seal with a pair of chamfers (84) formed in opposite peripheral edges (86, 88) of the adjoining platforms.

10. The method as claimed in claim 9, wherein the chamfer is cast into the peripheral edges of the platform.

11. The method as claimed in claim 9, wherein the chamfer machined into the peripheral edges of the platform.

12. The method as claimed in any of claims 9, 10 or 11, wherein the damper seal is formed from stamped sheet metal.

13. The method as claimed in any of claims 9 to 12, wherein the blade is a compressor blade.

14. The method as claimed in any of claims 9 to 12, wherein the blade is a turbine blade.
